# EUROPÄISCHE PATENTSCHRIFT

(11) **EP 3 172 543 B1**
(45) Veröffentlichungstag und Bekanntmachung des Hinweises auf die Patenterteilung: **08.12.2021**
(21) Anmeldenummer: 15738621.0
(22) Anmeldetag: 14.07.2015
(51) Int. Cl.: G01K 7/22, G01K 1/12

(54) **SENSORANORDNUNG UND VERFAHREN ZUR HERSTELLUNG EINES SENSORELEMENTS UND EINER SENSORANORDNUNG**
SENSOR ARRAY, AND METHOD FOR MANUFACTURING A SENSOR ELEMENT AND A SENSOR ARRAY
SYSTÈME DE DÉTECTION ET PROCÉDÉ POUR PRODUIRE UN ÉLÉMENT SENSIBLE ET UN SYSTÈME DE DÉTECTION

(30) Priorität: 25.07.2014 DE 102014110560
(43) Veröffentlichungstag der Anmeldung: 31.05.2017
(73) Patentinhaber: TDK Electronics AG, 81671 München (DE)
(72) Erfinder: STRALLHOFER, Heinz, A-8530 Deutschlandsberg (AT); KLOIBER, Gerald, A-8073 Feldkirchen (AT); STENDEL, Thomas, 12209 Berlin (DE); IHLE, Jan, A-8074 Raaba-Grambach (AT)
(74) Vertreter: Epping - Hermann - Fischer
(86) Internationale Anmeldenummer: PCT/EP2015/066078
(87) Internationale Veröffentlichungsnummer: WO 2016/012311

(56) Entgegenhaltungen:
- EP-A1- 1 227 308
- WO-A1-2010/055013
- WO-A2-2014/072125
- DE-A1-102004 010 713
- DE-T5-112011 102 074
- JP-A- 2009 270 955
- JP-A- 2009 288 023
- JP-B2- 2 897 837
- US-A1- 2010 066 482

## Beschreibung

Es wird ein Sensorelement mit einem keramischen Grundkörper angegeben. Das Sensorelement kann insbesondere zur Messung einer Temperatur dienen. Beispielsweise handelt es sich um ein NTC-Sensorelement (negative temperature coefficient), also um einen Heißleiter.

Die Anforderungen an Sensorelemente, insbesondere Temperatursensoren hinsichtlich der Langzeitbeständigkeit in aggressiven Medien und der Einsatztemperaturen erfordern eine hohe Robustheit. Gleichzeitig sollte das Sensorelement kostengünstig herstellbar sein.

Für eine elektrische Kontaktierung der Keramik werden metallische Elektroden auf den Grundkörper aufgebracht. Üblicherweise werden Anschlussdrähte an die metallischen Elektroden angelötet.

In der DE 11 2011 102074 T5 wird ein Temperatursensorelement, welches zum Detektierten einer Temperatur z.B. in Abgasen eingesetzt werden kann, beschrieben. Das Temperatursensorelement weist eine siliziumbasierte Thermistorkeramik auf. An der Keramik sind chromhaltige Metallelektroden angebracht, wobei der Chromanteil mit einer erhöhten Oxidationsbeständigkeit assoziiert wird. Die Elektroden sind durch entsprechende Leitungen kontaktiert.

Es ist eine Aufgabe der vorliegenden Erfindung, ein verbessertes Sensorelement, eine verbesserte Sensoranordnung und ein verbessertes Herstellungsverfahren für ein Sensorelement anzugeben.

Gemäß einem ersten Aspekt der Erfindung wird ein Sensorelement mit einen keramischen Grundkörper angegeben. Vorzugsweise handelt es sich hierbei um eine NTC-Keramik. Beispielsweise weist die Keramik eine Perowskitstruktur umfassend die Elemente Y, Ca, Cr, Al, O oder eine Spinellstruktur umfassend die Elemente Ni, Co, Mn, O auf. Das Sensorelement ist insbesondere zur Messung einer Temperatur ausgebildet.

Das Sensorelement weist wenigstens eine Elektrode auf. Die Elektrode ist am Grundkörper, insbesondere auf einer Seitenfläche des Grundkörpers, angeordnet. Vorzugsweise sind zwei Elektroden am Grundkörper angeordnet. Beispielsweise ist eine weitere Elektrode auf einer weiteren, insbesondere auf einer gegenüberliegenden, Seitenfläche des Grundkörpers angeordnet. Das Sensorelement ist beispielsweise quaderförmig ausgebildet. Die Elektroden sind beispielsweise auf einer Ober- und Unterseite des Grundkörpers angeordnet.

Vorzugsweise ist die gesamte Elektrode schichtförmig ausgebildet. Die Elektrode kann mehrere Schichten aufweisen.

Das Sensorelement weist wenigstens ein Kontaktstück zur elektrischen Kontaktierung der Elektrode auf, das an der Elektrode durch Schweißen oder Bonden befestigt ist. Beispielsweise wird das Kontaktstück durch ein Verfahren aus der Menge Spaltschweißen, Thermodenschweißen oder Laserschweißen an der Elektrode befestigt. Beim Bonden kann ein Verfahren aus der Menge Dickdrahtbonden oder Dünndrahtbonden angewendet werden. Dies hängt insbesondere von der Art des Kontaktstücks ab.

Es hat sich gezeigt, dass die Temperaturbeständigkeit des Sensorelements bei einer derartigen Verbindungstechnik gegenüber einer Lötverbindung verbessert ist. Die Einsetztemperatur von Lötverbindungen ist durch die Schmelztemperatur der Lote begrenzt. Hochbleihaltige Lote haben eine Schmelztemperatur von ca. 300°C und viele bleifreie Lote schmelzen bereits bei Temperaturen unter 230°C. Lötverbindungen sind besonders bei häufigen Temperaturwechselbelastungen nicht ausreichend zuverlässig. Insbesondere weist die Kontaktstelle, d.h., die Verbindungsstelle zwischen Kontaktstück und Elektrode, eine bessere Langzeitstabilität auf. Bei lotfreien, insbesondere silberfreien, Aufbauten wird auch die Migrationsbeständigkeit verbessert.

Vorzugsweise sind zwei Kontaktstücke vorhanden, die jeweils an einer von zwei Elektroden des Sensorelements befestigt sind. Vorzugsweise ist das Kontaktstück direkt an der Elektrode befestigt. Im Folgenden wird eines der Kontaktstücke im Detail beschrieben, wobei die Beschreibung gleichermaßen für das andere Kontaktstück gelten kann.

Beispielsweise ist das Kontaktstück als Draht ausgebildet.

Der Draht kann rund ausgebildet sein oder an der Verbindungsstelle abgeflacht sein. Des Weiteren kann ein Draht mit rechteckigem Querschnitt oder ein flaches Band verwendet werden. Es kann sich dabei um eine kurze Drahtbrücke handeln, die beispielsweise zur elektrischen Verbindung des Sensorelements mit einem Anschlusselement dient. Insbesondere kann es sich um einen dünnen Draht handeln, der beispielsweise durch Dünndrahtbonden an der Elektrode befestigt ist.

Das Anschlusselement kann beispielsweise an einem Träger angeordnet sein, Teil eines Trägers sein oder als Träger ausgebildet sein. Beispielsweise handelt es sich bei dem Anschlusselement um eine Leiterbahn auf einer Platine, um einen leitfähigen Träger eines Fühlers oder um eine Metallisierung eines derartigen Trägers.

Auch das Kontaktstück kann an einem Träger angeordnet sein, Teil eines Trägers sein oder als Träger ausgebildet sein. In einer Ausführungsform bildet das Kontaktstück gleichzeitig einen Träger für das Sensorelement oder ist ein integraler Bestandteil des Trägers. In diesem Fall ist die Elektrode des Sensorelements vorzugsweise direkt am Träger befestigt, d.h. ohne ein weiteres, separates Kontaktelement. Beispielsweise wird das Kontaktstück in diesem Fall durch Dickdrahtbonden am der Elektrode befestigt.

In einer Ausführungsform ist das Kontaktstück als ein separates Kontaktelement ausgebildet. Insbesondere ist das Kontaktstück kein integraler Bestandteil eines Trägers. Das Kontaktstück kann an einem Träger befestigt sein, beispielsweise durch Schweißen oder Bonden.

Beispielsweise enthält oder besteht das Kontaktstück aus einem oder mehreren temperaturstabilen Metallen mit geringer Korrosionsneigung. In einer Ausführungsform enthält das Kontaktstück ein edles Metall wie z. B. Pt, Au, Ag oder besteht aus einem oder mehreren dieser Metalle. In einer Ausführungsform enthält das Kontaktstück ein halbedles Metall wie z. B. Cu oder besteht aus einem oder mehreren dieser Metalle. In einer Ausführungsform enthält das Kontaktstück ein unedles Metall wie z. B. Fe, Ni oder besteht aus einem oder mehreren dieser Metalle. Das Kontaktstück kann auch eine Legierung enthalten.

Das Kontaktstück kann auch Teilbereiche mit unterschiedlichen Materialien enthalten. Beispielsweise weist das Kontaktstück einen metallischen Kern auf und ist mit einem oder mehreren anderen Metallen ummantelt. Die Oberfläche des Kontaktstücks kann zusätzlich noch eine Beschichtung wie z. B. Verzinnung, Vernickelung oder Versilberung aufweisen.

In einer Ausführungsform weist die Elektrode wenigstens eine Schicht auf, die durch eine eingebrannte Paste gebildet ist. Die Paste ist beispielsweise direkt auf der Keramik des Grundkörpers aufgebracht. Die Paste kann durch Siebdruck aufgebracht sein. Auf der eingebrannten Schicht können ein oder mehrere weitere Schichten angeordnet sein. Beispielsweise sind auf die eingebrannte Schicht ein oder mehrere gesputterte Schichten aufgebracht.

Eine eingebrannte Elektrode eignet sich auch für hohe Einsatztemperaturen des Sensorelements, beispielsweise im Bereich von 250 °C bis 300 °C oder höher. Zudem ist eine eingebrannte Elektrode auch für weitere Schritte des Herstellprozess geeignet, die eine hohe Temperatur erfordern. Beispielsweise wird das Sensorelement nach dem Anbringen des Kontaktstücks mit einer Glasumhüllung versehen.

In einer Ausführungsform weist die Elektrode Gold oder Silber auf. Diese Materialien eignen sich besonders für eine eingebrannte Schicht.

In einer Ausführungsform weist die Elektrode wenigstens eine gesputterte Schicht auf. Vorzugsweise ist die gesputterte Schicht direkt auf der Keramik des Grundkörpers aufgebracht und steht damit in unmittelbarem Kontakt mit der Keramik. Beispielsweise sind alle Schichten durch Sputtern aufgebracht. Beispielsweise ist die Elektrode frei von einer eingebrannten Paste.

Bei einer gesputterten Elektrode besteht ein Vorteil in der geringeren thermischen Belastung des Sensorelements im Herstellungsprozess, insbesondere durch den Wegfall eines Einbrennens einer Metallisierungspaste bei Temperaturen von beispielsweise 700°C-900°C. Weiterhin erlaubt ein Sputterprozess eine besonders kostengünstige Herstellung, da beispielsweise Prozesskosten einer Einbrandelektrode, wie z. B. Pastenaufbringung und -trocknung sowie der anschließende Einbrand wegfallen. Zudem ermöglicht ein Sputterprozess eine größere Materialwahl bei der Elektrode. Dadurch wird auch eine größere Flexibilität hinsichtlich Material und Befestigung eines Kontaktstücks erreicht.

Beispielsweise handelt es sich bei der Elektrode um eine Dünnschichtelektrode. Beispielsweise weist die gesamte Elektrode eine Dicke im Bereich von 0,3 µm bis 30 µm auf.

In einer Ausführungsform weist die Elektrode wenigstens eine Schicht enthaltend Nickel auf. Die Schicht kann auch aus Nickel bestehen.

Eine nickelhaltige Schicht erlaubt eine besonders gute mechanische und elektrische Anbindung, insbesondere an die Keramik. Beispielsweise kann ein niederohmiger Kontakt zur Keramik erzielt werden. Weiterhin ermöglicht eine nickelhaltige Schicht eine zuverlässige Kontaktierung des Sensorelements durch Kontaktstücke aus unterschiedlichen Materialien. Dadurch wird eine hohe Flexibilität in der Anwendung bereitgestellt. Beispielsweise erlaubt eine derartige Elektrode eine Anbindung von gold-, silber-, aluminium- und kupferhaltigen Kontaktstücken. Vorzugsweise sind das Material des Kontaktstücks und das Material der Elektrode, beispielsweise das Material einer Deckschicht, aufeinander abgestimmt. Beispielsweise wird bei einem goldhaltigen Kontaktstück eine goldhaltige Deckschicht und bei einem aluminiumhaltigen Kontaktstück eine aluminiumhaltige Deckschicht verwendet.

Beispielsweise ist die nickelhaltige Schicht gesputtert. Beispielsweise ist die nickelhaltige Schicht direkt auf der Keramik des Grundkörpers aufgebracht und steht damit in unmittelbarem Kontakt mit der Keramik.

In einer Ausführungsform enthält die nickelhaltige Schicht zusätzlich einen Anteil an Vanadium. Ein Anteil an Vanadium kann insbesondere aus prozesstechnischen Gründen bei einem Sputterverfahren von Vorteil sein. Beispielsweise ist Vanadium in einem Gewichtsanteil von 7% in der nickelhaltigen Schicht vorhanden. Nickel ist beispielsweise in einem Gewichtsanteil von 93% vorhanden.

Die Dicke der nickelhaltigen Schicht liegt beispielsweise im Bereich von 0,3 µm bis 10 µm.

In einer Ausführungsform weist die Elektrode mehrere Schichten auf, die direkt übereinander angeordnet sind.

Beispielsweise weist die Elektrode eine untere und eine obere Schicht auf. Die untere Schicht ist vorzugsweise in direktem Kontakt mit der Keramik des Grundkörpers. Die obere Schicht ist beispielsweise direkt auf der unteren Schicht aufgebracht. Beispielsweise sind beide Schichten gesputtert. Alternativ kann zumindest die untere Schicht eingebrannt sein. Die Elektrode kann auch mehr als zwei Schichten aufweisen.

Beispielsweise enthält die untere Schicht Chrom oder besteht aus Chrom. Eine chromhaltige Schicht kann insbesondere als Haftvermittler zur Keramik vorteilhaft sein.

Beispielsweise enthält die obere Schicht Nickel oder besteht aus Nickel. Zusätzlich kann die obere Schicht einen Anteil an Vanadium aufweisen.

Erfindungsgemäß weist die Elektrode zusätzlich eine Deckschicht auf. Die Deckschicht ist die oberste Schicht der Elektrode und schließt somit die Elektrode nach oben hin ab. Der unter der Deckschicht liegende Teil der Elektrode kann auch als Elektrodenbasis bezeichnet werden. Es kann sich hierbei insbesondere um ein oder mehrere Schichten handeln.

Erfindungsgemäß enthält die Deckschicht ein oxidationshemmendes Metall. Insbesondere enthält die Deckschicht wenigstens ein Material aus der Menge Silber, Gold, Kupfer und Aluminium. Vorzugsweise ist die Deckschicht gesputtert.

Durch die Deckschicht kann eine Korrosion der Elektrode, insbesondere eine Korrosion einer unter der Deckschicht liegenden Schicht der Elektrode verhindert werden. Weiterhin kann die Deckschicht auch die mechanische Belastbarkeit der Elektrode verbessern.

Alternativ oder zusätzlich dazu kann die Deckschicht für die Kontaktierung mit dem Kontaktstück von Vorteil sein. In einer Ausführungsform, die kein Teil der Erfindung ist, ist das Kontaktstück direkt an der Deckschicht befestigt. Bei einer Bondverbindung wird beispielsweise an eine goldhaltige oder eine aus Gold bestehende Deckschicht ein Golddraht befestigt.

Erfindungsgemäß ist das Kontaktstück an einem Teil der Elektrode, insbesondere an einer Schicht, befestigt, die teilweise von der Deckschicht bedeckt ist. Beispielsweise ist die Deckschicht nur auf einem Teil der Elektrodenbasis aufgebracht, so dass ein Teil der Elektrodenbasis frei von der Deckschicht ist. In diesem Fall kann eine elektrische Kontaktierung der Elektrode direkt an der Elektrodenbasis erfolgen. Die Deckschicht dient dann beispielsweise nur als Oxidationsschutz für freiliegende Teile der Elektrodenbasis.

Beispielsweise weist die Deckschicht eine Dicke im Bereich von 0,05 µm bis 20 µm auf. Die Elektrodenbasis, d.h., der Rest der Elektrode weist beispielsweise eine Dicke im Bereich von 0,3 µm bis 10 µm auf.

Gemäß einem weiteren Aspekt der Erfindung wird eine Sensoranordnung aufweisend ein wie oben beschriebenes Sensorelement angegeben. Die Sensoranordnung weist einen Träger zum Tragen des Grundkörpers auf. Der Grundkörper ist vorzugsweise am Träger befestigt. Der Träger weist vorzugsweise eine ausreichende Eigenstabilität auf, um den Grundkörper in einer festen Position zu halten, insbesondere auch in unterschiedlichen Orientierungen des Trägers, ohne dass eine Formänderung der Trägers oder eine Veränderung der Position des Grundkörpers auftritt.

Der Träger kann neben seiner Funktion des Tragens des Grundkörpers auch zum elektrischen Anschluss des Grundkörpers dienen. Der Träger kann elektrisch leitend ausgebildet sein oder elektrisch leitende Teile aufweisen. Insbesondere kann der Grundkörper mit dem Träger elektrisch leitend verbunden sein.

Die Elektrode des Sensorelements ist mit dem Träger durch eine Schweiß- oder Bondverbindung verbunden, insbesondere elektrisch verbunden. Die Verbindung kann direkt oder indirekt sein.

In einer Ausführungsform, die kein Teil der Erfindung ist, ist die Elektrode des Sensorelements direkt mit dem Träger elektrisch verbunden. In diesem Fall kann das oben beschriebene Kontaktstück gleichzeitig als Träger fungieren oder einen Teil des Trägers bilden. Beispielsweise ist die Elektrode mit dem Träger durch Bonden, insbesondere Dickdrahtbonden, verbunden.

Erfindungsgemäß ist die Elektrode indirekt mit dem Träger elektrisch verbunden. Insbesondere ist das Kontaktstück als separates Kontaktelement ausgebildet und kein integraler Bestandteil des Trägers. Die Elektrode ist in diesem Fall über das Kontaktelement mit dem Träger verbunden.

Das Kontaktelement ist durch eine Schweiß- oder Bondverbindung mit der Elektrode verbunden. Beispielsweise kann es sich bei dem Kontaktelement um einen Draht, beispielsweise um eine Drahtbrücke handeln.

Beispielsweise ist der Träger stabförmig ausgebildet. Beispielsweise weist der Träger einen dicken Draht oder eine Stange auf. Der Träger kann zwei Trägerelemente umfassen. Jedes Trägerelement kann stabförmig ausgebildet sein, beispielsweise als dicker Draht oder Stange. In einer anderen Ausführungsform ist der Träger als Keramikträger ausgebildet. Beispielsweise weist der Keramikträger Metallisierungen zum elektrischen Anschluss der Elektrode auf.

In einer Ausführungsform ist die Sensoranordnung als Fühler ausgebildet. Der Fühler wird beispielsweise zur Messung von

Parametern eines strömenden Mediums eingesetzt, insbesondere einer Temperatur. Beispielsweise kann der Fühler durch eine Öffnung in die Wandung eines Rohres gesteckt werden. Der Träger weist beispielsweise einen dicken, formstabilen Draht auf, der mit der Elektrode verbunden ist. Der Draht ist beispielsweise direkt an der Elektrode durch Dickdrahtbonden befestigt. Alternativ kann der Draht auch über eine Drahtbrücke mit der Elektrode verbunden sein.

In einer Ausführungsform, die kein Teil der Erfindung ist, ist der Träger als Platine ausgebildet. Insbesondere kann die Platine Leiterbahnen aufweisen, die mit den Elektroden des Sensorelements elektrisch verbunden sind. Eine Elektrode kann mit einer Leiterbahn durch ein Kontaktstück, beispielsweise eine Drahtbrücke, durch Schweißen oder Bonden verbunden sein. Das Sensorelement kann mit einer weiteren Elektrode auf eine Leiterbahn aufgesetzt und an der Leiterbahn befestigt sein. Beispielsweise kann die weitere Elektrode mit der Leiterbahn versintert sein, beispielsweise unter Druck bei niedriger Temperatur.

Die Sensoranordnung kann eine Umhüllung aufweisen, die das Sensorelement zumindest teilweise umgibt. Die mechanische Befestigung des Sensorelements am Träger kann auch mittels der Umhüllung erfolgen.

Gemäß einem weiteren Aspekt der vorliegenden Erfindung wird ein Verfahren zur Herstellung des oben beschriebenen Sensorelements und/oder der Sensoranordnung angegeben. Es wird ein keramischer Grundkörper bereitgestellt, der wenigstens eine Elektrode aufweist, die beispielsweise auf einer Seitenfläche des Grundkörpers angeordnet ist. Weiterhin wird ein Kontaktstück bereitgestellt und an der Elektrode durch Schweißen oder Bonden befestigt. Bei der Herstellung einer Sensoranordnung wird zudem ein Träger zum Tragen des Grundkörpers bereitgestellt. Das Kontaktstück kann einen integralen Bestandteil des Trägers bilden.

In der vorliegenden Offenbarung sind mehrere Aspekte einer Erfindung beschrieben. Alle Eigenschaften, die in Bezug auf das Sensorelement, die Sensoranordnung oder das Verfahren offenbart sind, sind auch entsprechend in Bezug auf die jeweiligen anderen Aspekte offenbart und umgekehrt, auch wenn die jeweilige Eigenschaft nicht explizit im Kontext des jeweiligen Aspekts erwähnt wird.

Im Folgenden werden die hier beschriebenen Gegenstände anhand von schematischen und nicht maßstabsgetreuen Ausführungsbeispielen näher erläutert.

Es zeigen:
- Figur 1: eine perspektivische Ansicht eines Sensorelements,
- Figur 2: eine erste Ausführungsform einer Sensoranordnung,
- Figur 3A: eine zweite Ausführungsform einer Sensoranordnung,
- Figur 3B: ein vergrößerter Ausschnitt aus Figur 3A,
- Figur 4A: eine dritte Ausführungsform einer Sensoranordnung,
- Figur 4B: ein vergrößerter Ausschnitt aus Figur 4A,
- Figur 5A: eine vierte Ausführungsform einer Sensoranordnung,
- Figur 5B: ein vergrößerter Ausschnitt aus Figur 5A.

Vorzugsweise verweisen in den folgenden Figuren gleiche Bezugszeichen auf funktionell oder strukturell entsprechende Teile der verschiedenen Ausführungsformen.

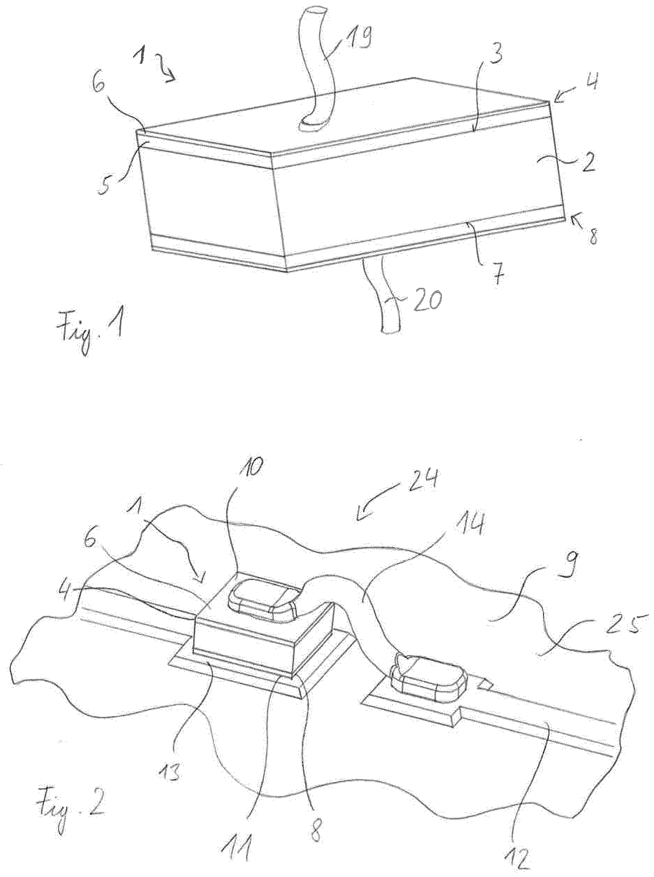

Figur 1 zeigt ein Sensorelement 1, insbesondere einen Sensorchip. Das Sensorelement 1 ist vorzugsweise zur Messung einer Temperatur ausgebildet. Das Sensorelement weist einen keramischen Grundkörper 2 auf. Insbesondere ist die Keramik eine NTC (Negative-Temperature-Coefficient) Keramik. Beispielsweise weist die Keramik eine Perowskitstruktur auf. Insbesondere kann die Keramik auf dem System Y-Ca-Cr-Al-(Sn)-O beruhen, wobei in Klammern gesetzte Elemente optional vorhanden sind. Ein derartiges Sensorelement 1 eignet sich besonders für Hochtemperaturanwendungen. Alternativ kann das Sensorelement 1, insbesondere bei geringeren Anwendungstemperaturen, eine Keramik mit einer Spinellstruktur aufweisen. Beispielsweise kann die Keramik auf dem System Ni-Co-Mn-(Al)-(Fe)-(Cu)-(Zn)-(Ca)-(Zr)-(Ti)-(Mg)-O beruhen.

Das Sensorelement 1 weist eine Elektrode 4 auf, die auf einer Seitenfläche 3 des Grundkörpers 2 angeordnet ist. Auf einer weiteren, gegenüberliegenden Seitenfläche 7 ist eine weitere Elektrode 8 angeordnet. Im Folgenden wird der Aufbau der einen Elektrode 4 beschrieben, wobei die Beschreibung analog für die weitere Elektrode 8 gelten kann.

Die Elektrode 4 ist eine schichtförmige Elektrode mit mehreren Schichten 5, 6. Die Schichten 5, 6 sind beispielsweise gesputtert. Die Elektrode 4 ist derart ausgebildet, dass eine zuverlässige elektrische Kontaktierung der Elektrode 4 durch Bonden oder durch Schweißen erfolgen kann.

Die Elektrode 4 weist eine Schicht 5 auf, die auch als Elektrodenbasis bezeichnet wird. Die Schicht 5 ist direkt auf der Keramik des Grundkörpers 2 aufgebracht. Die Schicht 5 enthält beispielsweise Nickel mit einem Anteil an Vanadium oder besteht aus diesen Metallen.

Auf der Schicht 5 ist eine Deckschicht 6 aufgebracht. Beispielsweise dient die Deckschicht 6 als Korrosionsschutz für die Elektrodenbasis, insbesondere zur Verhinderung einer Oxidation. Die Deckschicht 6 enthält beispielsweise Silber, Gold, Kupfer oder Aluminium oder besteht aus einem dieser Materialien.

In einer Ausführungsform kann die Elektrodenbasis mehrschichtig ausgebildet sein. Eine untere Schicht der Elektrodenbasis ist beispielsweise in direktem Kontakt mit der Keramik. Die untere Schicht enthält beispielsweise Chrom oder besteht aus Chrom. Die Elektrodenbasis kann zudem eine obere Schicht aufweisen, die auf der unteren Schicht aufgebracht ist. Die obere Schicht enthält beispielsweise Nickel mit einem Anteil an Vanadium oder besteht aus diesen Metallen.

Beispielsweise sind alle Schichten 5, 6 der Elektrode 4 durch Sputtern aufgebracht. Alternativ kann die Elektrodenbasis durch Einbrand einer Metallpaste, beispielsweise einer Gold- oder Silberpaste gebildet sein.

An den Elektroden 4, 8 sind Kontaktstücke 19, 20 durch Schweißen oder Bonden befestigt. Die Kontaktstücke 19, 20 sind als Kontaktelemente in Form von kurzen Drähten ausgebildet. Beispielsweise sind die Drähte durch Bonden an den Elektroden 4, 8 befestigt.

Die hier noch freien Enden der Kontaktstücke 19, 20 können mit Anschlusselementen verbunden werden. Beispielsweise stellen die Anschlusselemente den elektrischen Anschluss des Sensorelementes her und können gleichzeitig auch einen Träger für das Sensorelement bilden. Die Befestigung der Kontaktstücke 10, 20 an den Anschlusselementen kann ebenfalls durch Schweißen oder Bonden erfolgen. Alternativ können die Kontaktstücke auch an den Anschlusselementen angelötet werden.

In einer Ausführungsform bilden die Kontaktstücke einen integralen Bestandteil eines Trägers. In diesem Fall weisen die Kontaktstücke eine ausreichende Eigenstabilität auf, um den Grundkörper zu tragen. Beispielsweise sind die Kontaktstücke als dicke Drähte ausgebildet.

Die Kontaktstücke 19, 20 weisen vorzugsweise temperaturstabile Metalle mit geringer Korrosionsneigung auf. Es können beispielsweise edle Metalle wie z. B. Pt, Au, Ag oder Halbedelmetalle wie z. B. Cu als auch unedle Metalle wie z. B. Fe, Ni oder Legierungen Verwendung finden. Weiterhin können die Kontaktstücke 19, 20 auch mit unterschiedlichen Bereichen aufweisend unterschiedliche Materialien aufgebaut sein. Beispielsweise weisen die Kontaktstücke 19, 20 Teilbereiche unterschiedlicher Materialien auf. Die Kontaktstücke 19, 20 können einen metallischen Drahtkern aufweisen und mit einem oder mehreren anderen Metallen ummantelt sein. Die Oberfläche der Kontaktstücke 19, 20 kann zusätzlich noch eine Beschichtung wie z. B. Verzinnung, Vernickelung etc. aufweisen.

Figur 2 zeigt eine Sensoranordnung 24 aufweisend ein Sensorelement 1, das an einer Platine 9 befestigt ist. Dieser Aufbau ist insbesondere im Bereich der Leistungselektronik anwendbar. Der Grundkörper 2 und die Elektroden 4, 8 des Sensorelements 1 sind wie in Figur 1 ausgebildet.

Die Platine 9 fungiert als Träger 25 für den Grundkörper 2 des Sensorelements 1 sowie zum elektrischen Anschluss der Elektroden 4, 8. Das Sensorelement 1 weist eine Oberseite 10 und eine Unterseite 11 auf. Das Sensorelement 1 ist mit seiner Unterseite 11 an der Platine 9 befestigt. Die an der Oberseite 10 angeordnete Elektrode 4 ist mit einer ersten Leiterbahn 12 und die an der Unterseite 11 angeordnete weitere Elektrode 8 ist mit einer weiteren Leiterbahn 13 der Platine 9 elektrisch verbunden.

Das Sensorelement 1 ist beispielsweise mit seiner Unterseite 11 an der weiteren Leiterbahn 13 angelötet. Für eine migrationsbeständige, silber- und bleifreie Anbindung über Löten ist eine Deckschicht 6 enthaltend Gold oder bestehend aus Gold vorteilhaft. Alternativ ist weitere Elektrode 8 mit der weiteren Leiterbahn 13 versintert. Dazu wird beispielsweise eine feindisperse Silberpaste auf die Leiterbahn 13 und/oder die weitere Elektrode 8 aufgetragen. Es wird beispielsweise unter Druck bei niedrigen Temperaturen gesintert. In diesem Fall weist die Deckschicht der weiteren Elektrode 8 vorzugsweise Silber auf oder besteht aus Silber.

Die Elektrode 4 an der Oberseite 10 ist über ein Kontaktstück 14 mit der Leiterbahn 12 verbunden. Das Kontaktstück 14 ist beispielsweise durch Bonden an der Elektrode 4 und/oder der Platine 9 befestigt. Insbesondere ist das Kontaktstück 14 durch eine Drahtbrücke gebildet. Der Draht ist an seinen Enden abgeflacht. Insbesondere handelt es sich um einen dünnen Draht, der durch Dünndrahtbonden befestigt sein kann. Es wird beispielsweise ein Gold-, Aluminium- oder Kupferdraht verwendet. Die Deckschicht 6 der Elektrode 4 weist beispielsweise Gold auf. Das Kontaktstück 14 kann vom Material und Aufbau wie die in Figur 1 beschriebenen Kontaktstücke 19, 20 ausgebildet sein.

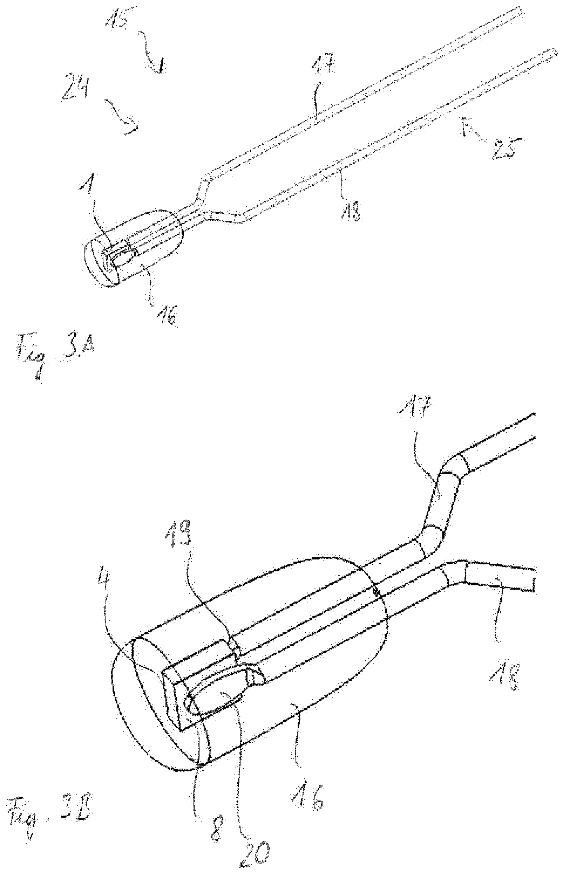

Figur 3A eine weitere Ausführungsform einer Sensoranordnung 24. Figur 3B zeigt einen vergrößerten Ausschnitt aus Figur 3A. Insbesondere handelt es sich um einen Fühler 15 aufweisend ein Sensorelement 1. Der Fühler 15 ist ein beispielsweise als Temperaturfühler ausgebildet. Das Sensorelement 1 ist beispielsweise wie in Figur 1 ausgebildet.

Der Fühler 15 ist stabförmig ausgebildet. Der Fühler 15 wird beispielsweise zur Messung einer Temperatur eines strömenden Mediums eingesetzt. Beispielsweise kann der Fühler 15 durch eine Öffnung in die Wandung eines Rohres gesteckt sein.

Der Fühler 15 weist einen Träger 25 umfassend zwei Trägerelemente 17, 18 auf. Die Trägerelemente 17, 18 sind beispielsweise als dicke Drähte ausgebildet, die den Grundkörper 2 des Sensorelements 1 tragen können und eine ausreichende Formstabilität aufweisen. Die Trägerelemente 17, 18 sind jeweils stabförmig ausgebildet.

Das Sensorelement 1 ist von einer Umhüllung 16 umgeben. Die Umhüllung 16 kann eine ausreichende mechanische Stabilität des Fühlers 15 gewährleisten. Weiterhin kann durch die Umhüllung 16 ein Schutz gegen äußere Einflüsse erfolgen, beispielsweise kann eine Korrosion des Sensorelements 1 durch aggressive Medien verhindert werden. Beispielsweise weist die Umhüllung 16 ein Polymer oder Glas auf. Die Trägerelemente 17, 18 ragen in die Umhüllung 16 hinein. Insbesondere sind die Kontaktstücke 19, 20 und somit die Kontaktstellen zwischen den Trägerelementen 17, 18 und dem Sensorelement 1 von der Umhüllung 16 umgeben.

Die Trägerelemente 17, 18 dienen auch zum elektrischen Anschluss des Sensorelements 1. Insbesondere sind die Trägerelemente 17, 18 elektrisch leitfähig. Die Enden der Trägerelemente 17, 18 sind als Kontaktstücke 19, 20 zur direkten elektrischen Kontaktierung mit den Elektroden 4, 8 ausgebildet. Die Kontaktstücke 19, 20 bilden einen integralen Teil der Trägerelemente 17, 18. Die Kontaktstücke 19, 20 der Trägerelemente 17, 18 sind beispielsweise an den Elektroden 4, 8 angeschweißt oder mittels Dickdrahtbondens befestigt.

Vorzugsweise wird zur Verbindung zwischen den Trägerelementen 17, 18 und den Elektroden 4, 8 kein Lotmittel eingesetzt. Bei einem Schweiß- oder Bondverfahren kann eine Migration verhindert werden und die Zuverlässigkeit des Sensorelements 1 erhöht werden.

Die Trägerelemente 17, 18 und insbesondere die Kontaktstücke 19, 20 können vom Material und Aufbau wie die in Figur 1 beschriebenen Kontaktstücke 19, 20 ausgebildet sein. Allerdings weisen die Kontaktstücke 19, 20 zusammen mit dem restlichen Teil der Trägerelemente 17, 18 eine ausreichende Eigenstabilität zum Tragen des Sensorelements 1 auf.

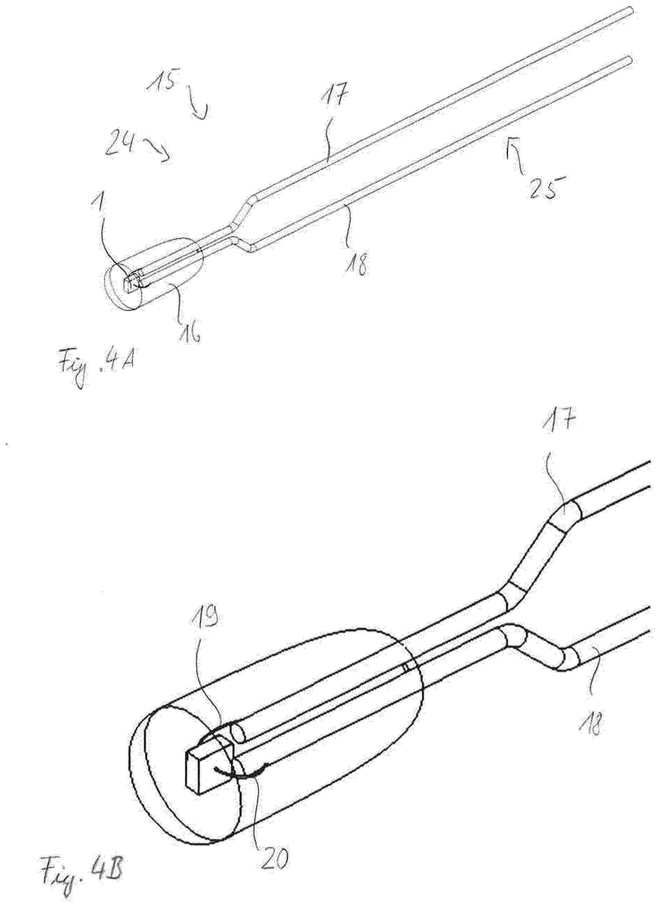

Figur 4A zeigt eine weitere Ausführungsform einer als Fühler 15 ausgebildeten Sensoranordnung 24. Figur 4B zeigt einen vergrößerten Ausschnitt aus Figur 4A. Die Sensoranordnung 24 ist ähnlich wie die Sensoranordnung 24 aus Figur 3A ausgebildet. Allerdings ist in der hier gezeigten Ausführungsform das Sensorelement 1 nicht direkt an den Trägerelementen 17, 18 befestigt, insbesondere nicht direkt mit den Trägerelementen 17, 18 elektrisch verbunden.

Vorliegend stellt die Umhüllung 16 die mechanische Befestigung des Sensorelements 1 am Träger 25 bereit.

Stattdessen ist das Sensorelement 1 über separate Kontaktstücke 19, 20 an den Trägerelementen 17, 18 befestigt. Die Kontaktstücke 19, 20 sind als Drähte, insbesondere als Bonddrähte ausgebildet. Das Sensorelement 1 mit den Kontaktstücken 19, 20 kann insbesondere wie in Figur 1 beschrieben ausgebildet sein.

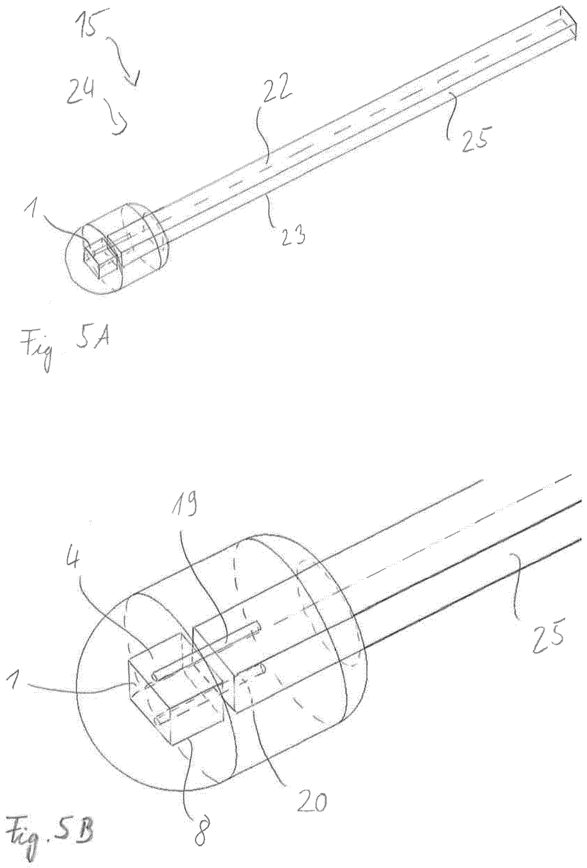

Figur 5A zeigt eine weitere Ausführungsform einer als Fühler 15 ausgebildeten Sensoranordnung 24 in semitransparenter Darstellung. Figur 5B zeigt einen vergrößerten Ausschnitt aus Figur 5A. Das Sensorelement 1 ist wie in Figur 1 ausgebildet.

Der Fühler 15 weist einen Träger 25 auf, der auf zwei Seiten mit Metallisierungen 22, 23 versehen ist. Der Träger 25 weist eine Keramik auf. Die Elektroden 4, 8 des Sensorelements 1 sind über jeweils ein Kontaktstück 19, 20 mit den Metallisierungen 22, 23 elektrisch verbunden. Die Kontaktstücke 19, 20 sind an den Elektroden 4, 8 des Sensorelements 1 durch Schweißen oder Bonden befestigt. Die Kontaktstücke 19, 20 sind am Träger 25 ebenfalls durch Schweißen oder Bonden befestigt.

### Bezugszeichenliste

- 1: Sensorelement
- 2: Grundkörper
- 3: Seitenfläche
- 4: Elektrode
- 5: Elektrodenbasis
- 6: Deckschicht
- 7: weitere Seitenfläche
- 8: weitere Elektrode
- 9: Platine
- 10: Oberseite
- 11: Unterseite
- 12: Leiterbahn
- 13: weitere Leiterbahn
- 14: Kontaktstück
- 15: Fühler
- 16: Umhüllung
- 17: Trägerelement
- 18: Trägerelement
- 19: Kontaktstück
- 20: Kontaktstück
- 22: Metallisierung
- 23: Metallisierung
- 24: Sensoranordnung
- 25: Träger

## Patentansprüche

1. Sensoranordnung aufweisend
ein Sensorelement (1) mit einem keramischen Grundkörper (2), zwei Elektroden (4, 8) die am Grundkörper angeordnet sind (2), zwei separate Kontaktstücke (19, 20) zur elektrischen Kontaktierung der Elektroden (4, 8), und einen Träger (25), der zwei Trägerelemente (17, 18) aufweist, wobei die Kontaktstücke (19, 20) jeweils eine der Elektroden (4, 8) mit einem der Trägerelemente (17, 18) verbinden, wobei die Elektroden (4, 8) jeweils eine Elektrodenbasis (5) sowie eine darauf angeordnete Deckschicht (6) aufweisen, welche ein oxidationshemmendes Metall ausgewählt aus Silber, Gold, Kupfer und Aluminium enthält, und wobei die Deckschicht (6) nur auf einem Teil der Elektrodenbasis (5) ausgebildet ist, so dass ein Teil der Elektrodenbasis (5) frei von der Deckschicht (6) ist und die Kontaktstücke (19, 20) die Elektrodenbasis (5) direkt kontaktieren.

2. Sensoranordnung nach Anspruch 1, bei dem die Kontaktstücke (19, 20) durch ein Verfahren aus der Menge Spaltschweißen, Thermodenschweißen und Laserschweißen befestigt sind.

3. Sensoranordnung nach Anspruch 1, bei dem die Kontaktstücke (19, 20) durch Dickdrahtbonden oder Dünndrahtbonden mit der Elektrode (4, 8) verbunden sind.

4. Sensoranordnung nach einem der vorhergehenden Ansprüche, bei dem die Kontaktstücke (19, 20) ein Metall aus der Menge Cu, Fe und Ni enthalten.

5. Sensoranordnung nach einem der vorhergehenden Ansprüche, bei dem die Elektroden (4, 8) wenigstens eine Schicht aufweisen, die durch eine eingebrannte Paste gebildet ist.

6. Sensoranordnung nach einem der vorhergehenden Ansprüche, bei dem die Elektroden (4, 8) wenigstens eine gesputterte Schicht (5, 6) aufweisen.

7. Sensoranordnung nach Anspruch 6, bei dem die gesputterte Schicht (5, 6) Nickel enthält.

8. Sensorelement nach einem der vorhergehenden Ansprüche, bei dem die Elektroden (4, 8) mehrere Schichten aufweisen, die direkt übereinander angeordnet sind.

9. Sensoranordnung nach Anspruch 8, bei dem die Elektroden (4, 8) eine Schicht (5) enthaltend Nickel und die darüber angeordnete Deckschicht (6) aufweist.

10. Sensoranordnung nach einem der vorhergehenden Ansprüche, bei der die Trägerelemente (17, 18) jeweils stabförmig ausgebildet sind.

11. Verfahren zur Herstellung der Sensoranordnung nach einem der vorhergehenden Ansprüche, wobei ein keramischer Grundkörper (2) bereitgestellt wird, an dem zwei Elektroden (4, 8) angeordnet sind, und wobei die Kontaktstücke (19, 20) an den Elektroden (4,8) durch Schweißen oder Bonden befestigt sind.

## Claims

1. Sensor arrangement comprising
a sensor element (1) having a ceramic main body (2), two electrodes (4, 8) which are arranged on the main body (2), two separate contact pieces (19, 20) for the electrical contacting the electrodes (4, 8), and a support (25) which has two support elements (17, 18), wherein the contact pieces (19, 20) each connect one of the electrodes (4, 8) to one of the support elements (17, 18),
wherein the electrodes (4, 8) each have an electrode base (5) and a surface layer (6) arranged on said electrode base (5), which surface layer comprises an oxidation-inhibiting metal selected from silver, gold, copper and aluminium, and wherein the surface layer (6) is formed only on a part of the electrode base (5), such that a part of the electrode base (5) is free from the surface layer (6) and the contact pieces (19, 20) directly contact the electrode bases (5).

2. Sensor arrangement according to Claim 1,
in which the contact pieces (19, 20) are fastened by way of a method from the group: gap welding, thermode welding and laser welding.

3. Sensor arrangement according to Claim 1,
in which the contact pieces (19, 20) are connected to the electrode (4, 8) by thick-wire bonding or thin-wire bonding.

4. Sensor arrangement according to any one of the preceding claims, in which the contact pieces (19, 20) comprise a metal from the group: Cu, Fe and Ni.

5. Sensor arrangement according to any one of the preceding claims, in which the electrodes (4, 8) have at least one layer which is formed by a burnt-in paste.

6. Sensor arrangement according to any one of the preceding claims, in which the electrodes (4, 8) have at least one sputtered layer (5, 6).

7. Sensor arrangement according to Claim 6, in which the sputtered layer (5, 6) comprises nickel.

8. Sensor arrangement according to any one of the preceding claims, in which the electrodes (4, 8) have multiple layers which are arranged directly one above the other.

9. Sensor arrangement according to Claim 8, in which the electrodes (4, 8) have a layer (5) comprising nickel and the surface layer (6) arranged above said layer (5).

10. Sensor arrangement according to any one of the preceding claims, in which the support elements (17, 18) are each of rod-shaped form.

11. Method for producing the sensor arrangement according to any one of the preceding claims, wherein a ceramic main body (2) is provided, on which two electrodes (4, 8) are arranged, and wherein the contact pieces (19, 20) are fastened to the electrodes (4, 8) by welding or bonding.

## Revendications

1. Agencement de capteur, présentant
un élément capteur (1) doté d'un corps de base céramique (2), de deux électrodes (4, 8) qui sont disposées sur le corps de base (2), de deux pièces de contact séparées (19, 20) pour la mise en contact électrique des électrodes (4, 8), et
un support (25) qui présente deux éléments de support (17, 18),
les deux pièces de contact (19, 20) reliant respectivement l'une des électrodes (4, 8) à l'un des éléments de support (17, 18),
les électrodes (4, 8) présentant respectivement une base d'électrode (5) ainsi qu'une couche de recouvrement (6) disposée sur celle-ci et qui contient un métal antioxydant sélectionné parmi l'argent, l'or, le cuivre et l'aluminium, et dans lequel
la couche de recouvrement (6) n'est réalisée que sur une partie de la base d'électrode (5) de sorte qu'une partie de la base d'électrode (5) est exempte de la couche de recouvrement (6) et les pièces de contact (19, 20) entrent en contact direct avec la base d'électrode (5).

2. Agencement de capteur selon la revendication 1, dans lequel les pièces de contact (19, 20) sont fixées par un procédé parmi l'ensemble du soudage par capillarité, du soudage par thermode et du soudage au laser.

3. Agencement de capteur selon la revendication 1, dans lequel les pièces de contact (19, 20) sont reliées à l'électrode (4, 8) par bonding à fil épais ou par bonding à fil fin.

4. Agencement de capteur selon l'une quelconque des revendications précédentes, dans lequel les pièces de contact (19, 20) contiennent un métal de l'ensemble Cu, Fe et Ni.

5. Agencement de capteur selon l'une quelconque des revendications précédentes, dans lequel les électrodes (4, 8) présentent au moins une couche qui est formée par une pâte cuite.

6. Agencement de capteur selon l'une quelconque des revendications précédentes, dans lequel les électrodes (4, 8) présentent au moins une couche pulvérisée cathodiquement (5, 6).

7. Agencement de capteur selon la revendication 6, dans lequel la couche pulvérisée cathodiquement (5, 6) contient du nickel.

8. Elément capteur selon l'une quelconque des revendications précédentes, dans lequel les électrodes (4, 8) présentent plusieurs couches qui sont disposées directement les unes au-dessus des autres.

9. Agencement de capteur selon la revendication 8, dans lequel les électrodes (4, 8) présentent une couche (5) qui contient du nickel et la couche de recouvrement disposée au-dessus de celle-ci (6).

10. Agencement de capteur selon l'une quelconque des revendications précédentes, dans lequel les éléments de support (17, 18) sont respectivement réalisés en forme de barre.

11. Procédé de fabrication de l'agencement de capteur selon l'une quelconque des revendications précédentes, dans lequel un corps de base céramique (2) est fourni sur lequel sont disposées deux électrodes (4, 8), et dans lequel les pièces de contact (19, 20) sont fixées aux électrodes (4, 8) par soudage ou par bonding.
